# EUROPEAN PATENT SPECIFICATION

(11) **EP 2 524 991 B1**
(45) Date of publication and mention of the grant of the patent: **27.04.2016**
(21) Application number: 11733043.1
(22) Date of filing: 11.01.2011
(51) Int. Cl.: D06F 39/02, D06F 37/22, D06F 39/12, A47L 15/44, C02F 1/68, F04B 43/10

(54) **PUMP DEVICE FOR A LIQUID DETERGENT**
PUMPVORRICHTUNG FÜR EIN FLÜSSIGES REINIGUNGSMITTEL
SYSTÈME DE POMPE POUR DÉTERGENT LIQUIDE

(30) Priority: 12.01.2010 KR 20100002651
(43) Date of publication of application: 21.11.2012
(73) Proprietor: Daewoo Electronics Corporation, Seoul 100-031 (KR)
(72) Inventor: HWANG, Ui Kun, Bucheon-si Gyeonggi-do 420-861 (KR)
(74) Representative: Michalski Hüttermann & Partner Patentanwälte mbB
(86) International application number: PCT/KR2011/000185
(87) International publication number: WO 2011/087255

(56) References cited:
- DE-A1- 19 643 270
- FR-A1- 2 496 137
- KR-U- 880 021 932
- KR-U- 900 000 777
- KR-Y1- 890 001 684
- KR-Y1- 900 004 287

## Description

### [TECHNICAL FIELD]

Exemplary embodiments of the present invention relate to a pump device for a liquid detergent, and more particularly, to a pump device for a liquid detergent, which reduces vibration and noise by inhibiting interference between parts during operation, thereby reducing damage to the parts.

### [Background Art]

In general, a washing machine is a product for removing various contaminants adhering to clothes, bedclothes and the like using an emulsion action of a detergent and a friction action of a water flow, caused by rotations of a pulsator. An automatic washing machine automatically performs a series of washing, rinsing, and spin drying processes without a user's manipulation in the middle.

The washing machine is divided into a top-loading washing machine having a washing tub erected therein and a drum washing machine having a washing tub laid down therein, depending on the shape of the washing tube for containing the laundry. The drum washing machine not only may reduce the entire height thereof in comparison with the top-loading washing machine, but also may increase the washing capacity. Furthermore, a problem such as laundry twisting does not almost occur in the drum washing machine. Accordingly, the demand for the drum washing machine is gradually increasing.

According to the recent trend, the use of a liquid detergent which easily dilutes with water has increased instead of a powder detergent. When such a liquid detergent is to be put into a washing machine, a pump device for a liquid detergent is used to supply the liquid detergent stored in a detergent tank to the inside of the washing machine.

The above-described configuration is a related art for helping an understanding of the present invention, and does not mean a related an which is widely known in the technical field to which the present invention pertains.

FR 2 496 137 A1 teaches a box for detergent product liquidates, that it includes a vat with a reserve, a dosing vat, and associated with the vats, a pump allowing to introduce into the dosing vat a given quantity of the contents of the vat with reserve.

In the conventional pump device for a liquid detergent, a supply tube connected to the pump device is moved by vibration generated during a pumping operation to supply a liquid detergent to a tub, and interferes with other parts, thereby causing vibration and noise. In this case, the parts may be damaged by the interference.

Therefore, there is a demand for a device for solving the problem.

### [Disclosure]

### [Technical Problem]

An embodiment of the present invention relates to a pump device for a liquid detergent, that is capable of inhibiting interference between parts, which occurs due to vibration generated during operation.

### [Technical Solution]

In one embodiment, a pump device for a liquid detergent includes: a corrugated
tube connected to a conveying tube unit from which the liquid detergent is discharged; a supply tube guiding the liquid detergent supplied through the corrugated tube to a tub; and a coupler connecting the corrugated tube and the supply tube and coupled to a base plate, wherein the coupler comprises:
an introduction hole portion coupled to the corrugated tube;
a connection hole portion coupled to the supply tube;
a main body connecting the introduction hole portion and the connection hole portion; and
a fixation portion formed on the main body and fixed to the base plate.

The coupler may include: an introduction hole portion coupled to the corrugated tube; a connection hole portion coupled to the supply tube; a main body connecting the introduction hole portion and the connection hole portion; and a fixation portion formed on the main body and fixed to the base plate.

The introduction hole portion and the connection hole portion may be integrated with the main body so as to be spaced from each other.

The fixation portion may include a hook inserted into a groove portion of the base plate.

The coupler may furtherer include an elastic portion inhibiting the fixation portion from coming off from the base plate.

The elastic portion may be arranged to be spaced upward from the fixation portion, and have both ends formed in a curved panel shape which is inclined downward.

When the fixation portion is inserted into the groove portion of the base plate and closely attached to the bottom surface of the base plate, both ends of the elastic portion may be closely attached to the top surface of the base plate.

### [Advantageous Effects]

In accordance with the embodiment of the present invention, the corrugated tube and the supply tube, through which the liquid detergent is transferred, are fixed by the coupler. Accordingly, it is possible to inhibit the movement of the parts caused by vibration generated by the pump device during the pumping operation to supply the detergent to the tub, thereby reducing vibration and noise during the liquid detergent pumping operation.

Furthermore, since the parts do not interfere with each other while the pumping operation of the pump device is performed, it is possible to prevent damage caused by the interference. Accordingly, the lifetime of the parts increases.

### [Description of Drawings]

The above and other aspects, features and other advantages will be more clearly understood from the following detailed description taken in conjunction with the accompanying drawings, in which:
FIG. 1 is an exploded perspective view of a pump device for a liquid detergent in accordance with an embodiment of the present invention;
FIG. 2 is a partially-expanded view of the pump device for a liquid detergent in accordance with the embodiment of the present invention, illustrating an exploded state of the pump device;
FIG. 3 is partially-expanded view of the pump device for a liquid detergent in accordance with the embodiment of the present invention, illustrating an assembled state of the pump device;
FIG. 4 is a cross-sectional view of the pump device for a liquid detergent in accordance with the embodiment of the present invention;
FIG. 5 is a schematic side cross-sectional view of the pump device for a liquid detergent in accordance with the embodiment of the present invention;
FIG. 6 is a side cross-sectional view of the pump device for a liquid detergent in accordance with the embodiment of the present invention, illustrating a state in which a conveying tube unit illustrated in FIG. 5 is moved toward a housing;
FIG. 7 is an expanded side cross-sectional view of a portion 'A' in FIG. 6;
FIG. 8 is an exploded perspective view of a first valve unit of the pump device for a liquid detergent in accordance with the embodiment of the present invention; and
FIG. 9 is a perspective view of the pump device for a liquid detergent in accordance with the embodiment of the present invention, illustrating a state in which the first valve unit of FIG. 8 is assembled.

### [Best Mode]

Hereinafter, a pump device for a liquid detergent in accordance with an embodiment of the present invention will be described with reference to accompanying drawings. The drawings are not necessarily to scale and in some instances, proportions may have been exaggerated in order to clearly illustrate features of the embodiments.

Furthermore, terms to be described below have been defined by considering functions in embodiments of the present invention, and may be defined differently depending on a user or operator's intention or practice. Therefore, the definitions of such terms are based on the descriptions of the entire present specification.

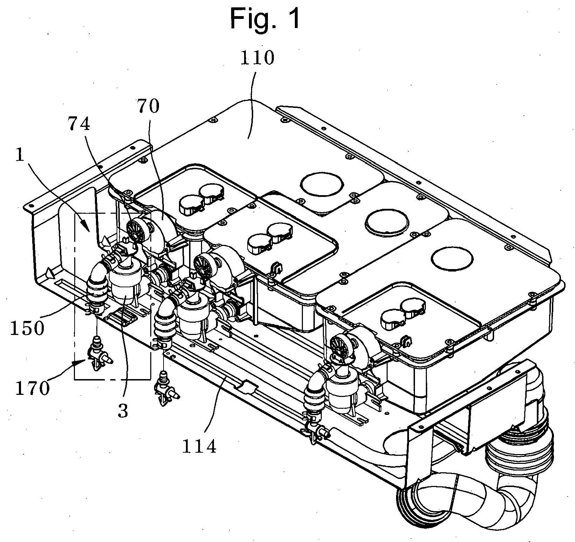

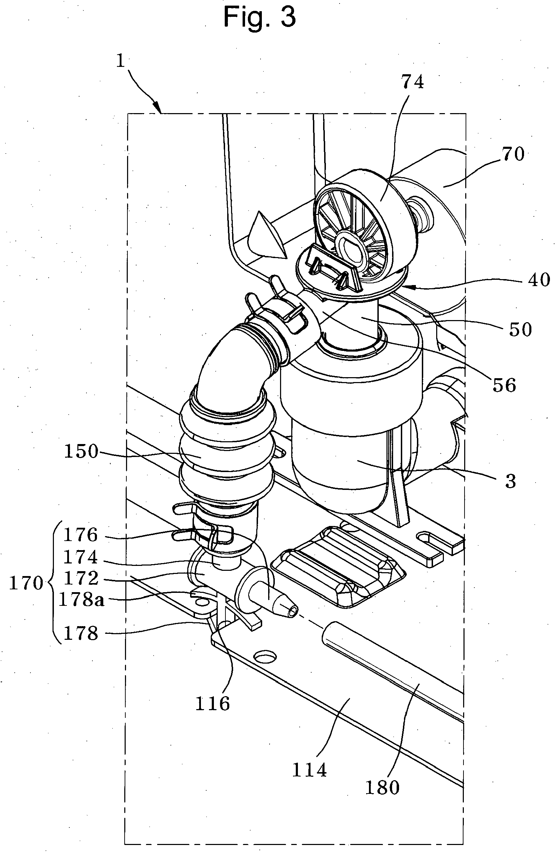

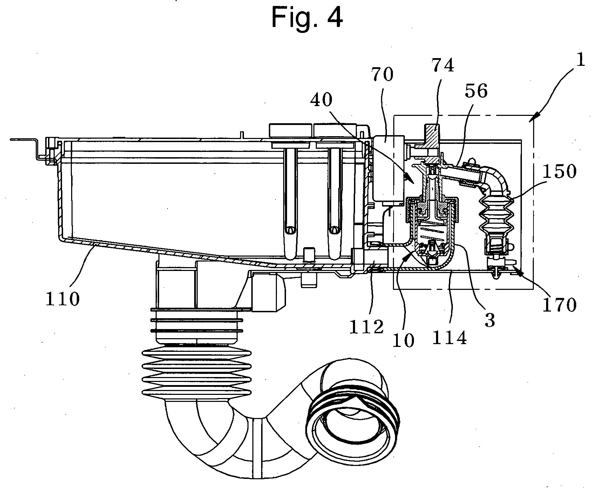

Referring to FIGS. 1 to 5, the pump device 1 for a liquid detergent in accordance with the embodiment of the present invention includes a housing 10, a conveying tube unit 40, a first valve unit 20, a second valve unit 60, a corrugated tube 150, a supply tube 180, and a coupler 170. The housing 10 has an inlet 16 formed to introduce a liquid detergent, and houses the introduced liquid detergent in an inner space 12 thereof. The conveying tube unit 40 has an inner tube 52 communicating with the inner space 12 of the housing 10, and is reciprocated along the inner space 12 of the housing 10 while elastically supported by the housing 10. The first valve unit 20 opens and closes the inlet 16 while interworking with the movement of the conveying tube unit 40. The second valve unit 60 opens and closes the inner tube 52 while interworking with the movement of the conveying tube unit 40. The corrugated tube 150 is connected to the conveying tube unit 40. The supply tube 180 guides a liquid detergent supplied through the corrugated tube 150 to a tub. The coupler 170 connects the corrugated tube 150 and the supply tube 180, and is coupled to a base plate 114.

The pump device 1 for a liquid detergent in accordance with the embodiment of the present invention is connected to a detergent tank 110 for containing a liquid detergent to receive the liquid detergent.

The housing 10 and the detergent tank 110 are connected to a connection tube 3. One side of the connection tube 3 is connected to the detergent tank 110, and the other side of the connection tube 3 is fixed to the housing 10. Therefore, the liquid detergent stored in the detergent tank 110 is supplied to the housing 10.

The housing 10 is formed in a tube shape of which the top is opened, and the inlet 16 communicating with the inner space 12 of the housing 10 is provided at the bottom of the housing 10.

At the entrance of the inlet 16 contacted with the first valve unit 20, a first guide portion 18 having an inclined shape is provided to guide the movement of the first valve unit 20.

The first valve unit 20 closes the inlet 16 at a preset pressure in normal times, but opens the inlet 16 when a force equal to or more than the preset pressure is applied. In this case, various valve devices may be used as the first valve unit 20, as long as they have the above-described operation.

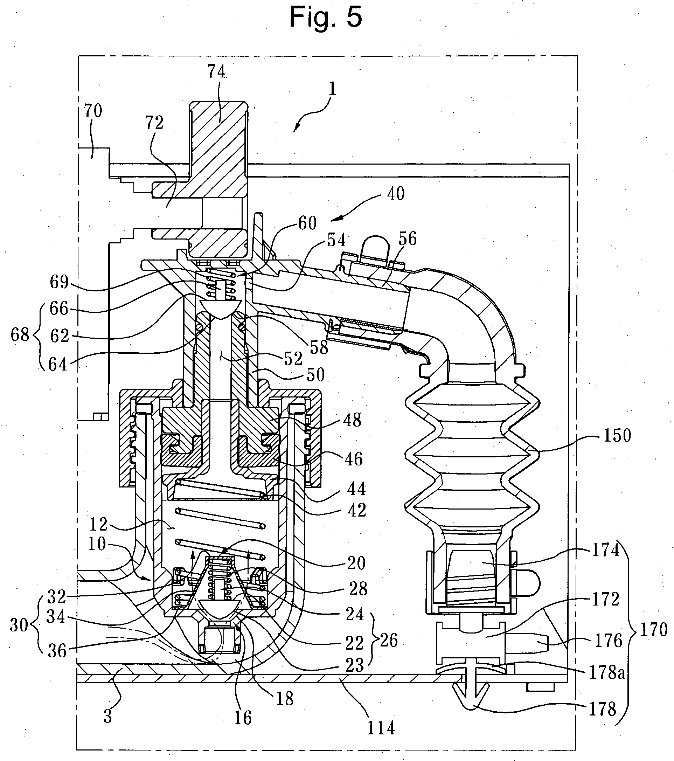

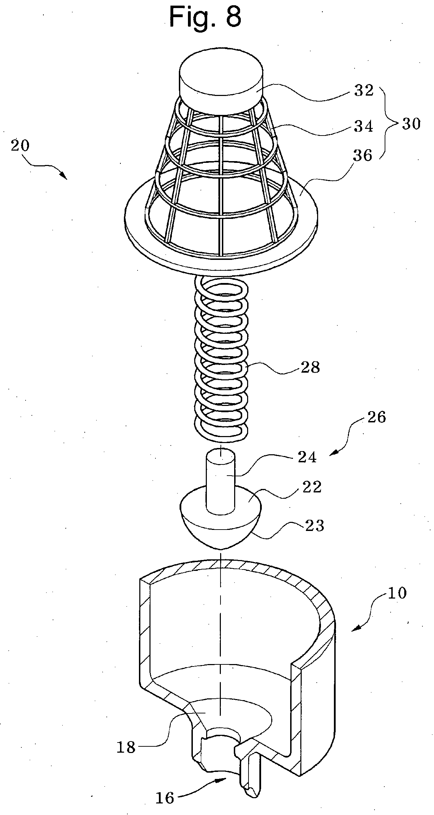

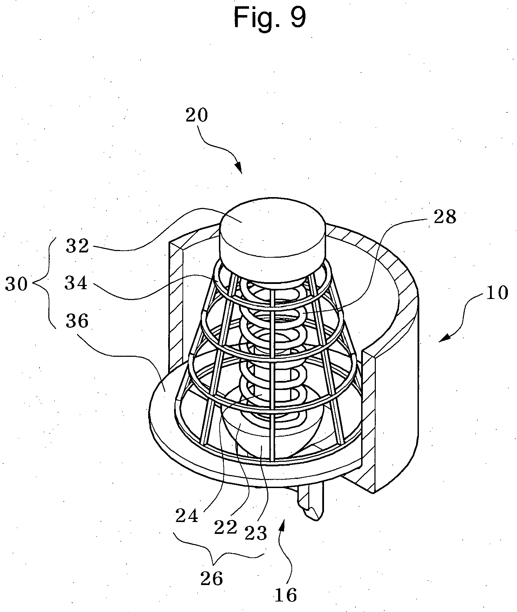

Referring to FIGS. 5, 8, and 9, the first valve unit 20 includes a first closing/opening member 26, a first elastic member 28, and a support member 30. The first closing/opening member 26 serves to open and close the inlet 16. The first elastic member 28 serves to pressurize the first opening/closing member 26 toward the inlet 16. The support member 30 serves to support one side of the first elastic member 28 at a position spaced from the inlet 16.

The support member 30 includes a mounting groove portion 32 into which the top of the first elastic member 28 is inserted, a wire-shaped rib member 34 for fixing the mounting groove portion 32 to a position spaced from the inlet 16, and a bent piece 36 bent at the bottom of the rib member 34 and closely attached to the bottom of a spring member 42.

In the first valve unit 20, since the first opening/closing member 26 is elastically pressurized toward the inlet 16, an elastic force of the first elastic member 29 may be controlled to change the pressure of the first opening/closing member 26 to close the inlet 16. Therefore, the design and change of the pump device 1 for a liquid detergent may be easily accomplished.

The first opening/closing member 26 and the support member 30 may be injection molded of plastic. Therefore, it is possible to reduce a production cost more than when a steel ball is used.

When the first valve unit 20 closes the inlet 16, the first opening/closing member 26 is elastically pressurized toward the inlet 16. Therefore, since the liquid detergent is prevented from moving through the inlet 16, it is possible to not only increase the operation reliability, but also prevent a siphon effect in which the liquid detergent of the detergent tank 110 is continuously supplied to the tub.

The first opening/closing member 26 includes a conical first stopper member 22 for closing the inlet 16 and a first body member 24 extended from the first stopper member 22 and positioned inside the first elastic member 28.

The first body member 24 is inserted into the first elastic member 28 to guide a vertical motion of the first opening/closing member 26, and the first stopper member 22 is guided while contacted with the first guide member 18 provided at the entrance of the inlet 16.

The first stopper member 22 contacted with the first guide member 18 may have a first round portion 23 formed in one side thereof and having a convexly-curved shape or an inclined surface formed in a straight line shape.

When the first round portion 23 has a convexly-curved shape, the first guide member 18 and the first stopper member 22 come in line contact with each other. Therefore, the first guide member 18 and the first stopper member 22 are contacted with each other without a space therebetween. Accordingly, the first valve unit 20 reliably cut off a flow of the liquid detergent, thereby improving the operation reliability.

The conveying tube unit 40 is inserted into the housing 10 to form the inner space 12 where the liquid detergent stays, and has the inner tube 52 communicating with the inner space 12.

The conveying tube unit 40 may be constructed by assembling various parts, as long as the conveying tube unit 40 is moved vertically inside the housing 10 to reduce or expand the inner space 12.

The conveying tube unit 40 inserted into the housing 10 is spaced from the bottom surface of the housing 10 and supported by the spring member 42.

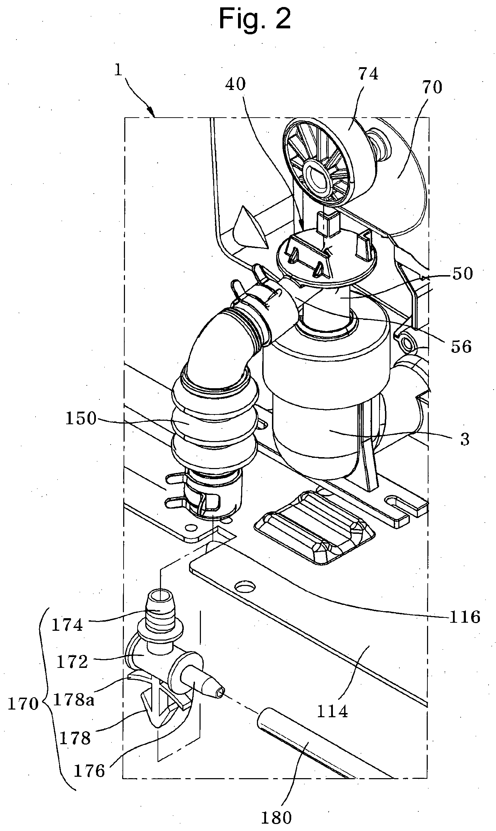

Referring to FIGS. 2, 3, 5, and 6, the conveying tube unit 40 includes a pressurization mounting portion 44, an inner tube portion 48, a packing portion 46, and an outer tube portion 50. The pressurization mounting portion 44 is installed to be contacted with the upper side of the inner space 12, while surrounding the top of the spring member 42. The inner tube portion 48 is connected to the pressurization mounting portion 44 and has the inner tube 52 provided therein. The packing portion 46 is formed of rubber and installed between the inner tube portion 48 and the pressurization mounting portion 44. The outer tube portion 50 is installed to surround the outside of the inner tube portion 48.

The inner tube 52 is installed through the pressurization mounting portion 44 and the inner tube portion 48.

The outer tube portion 50 includes a side tube portion 56 formed to be bent. The liquid detergent transferred to the upper side along the inner tube 52 is transferred to the side tube portion 56 through a connection hole 54.

The corrugated tube 150 is connected to the side tube portion 150. Therefore, when the conveying tube unit 40 is vertically moved to discharge the liquid detergent, the liquid detergent discharged through the side tube portion 56 is supplied to the tube through the corrugated tube 150, the coupler 170, and the supply tube 180.

The coupler 170 includes an introduction hole portion 174 coupled to the corrugated tube 150, a connection hole portion 176 coupled to the supply tube 180, a main body 172 connecting the introduction hole portion 174 and the connection hole portion 176, and a fixation portion 178 formed on the main body 172 and fixed to the base plate 114.

When the pump device 1 for a liquid detergent is installed, the corrugated tube 150 and the supply tube 180 are coupled to the introduction hole portion 174 and the connection hole portion 176, respectively, and the fixation portion 178 is coupled to the base plate 114 having the detergent tank 110 installed therein. Then, the pump device 1 is mounted on the base plate 114, while the corrugated tube 150 and the supply tube 180 are not moved a predetermined distance or more.

When the conveying tube unit 40 enters and comes out of the housing 10 to perform a pumping operation, the corrugated tube 150 repeats compression and expansion. At this time, the conveying tube unit 40 which is vertically reciprocated by a pressure of a cam member 74 may be rotated by friction between the cam member 74 and the conveying tube unit 40. Since the corrugated tube 150 connected to the side tube portion 56 of the conveying tube unit 40 is fixed to the base plate 114 by the coupler 170, the rotation of the conveying tube unit 40 is suppressed.

Since the introduction hole portion 174 and the connection hole portion 176 are integrated with the main body 172 so as to be spaced from each other, the supply tube 180 extended in a side direction from the coupler 170 may be easily coupled, and a plurality of supply tubes 180 may be arranged so as not to interfere with each other.

The fixation portion 178 includes a hook inserted into a groove portion 116 of the base plate 114. Therefore, after the corrugated tube 150 and the supply tube 180 are coupled to the introduction hole portion 174 and the connection hole portion 176, respectively, the fixation portion 178 may be inserted into the groove portion 116 so as to easily mount the coupler 170.

The coupler 170 includes an elastic portion 178a to inhibit the fixation portion 178 from coming off from the base plate 114. Therefore, after the fixation portion 178 is inserted into the groove portion 116, the fixation portion 178 is closely attached to the base plate 114. According to such a structure, although vibration occurs during a pumping operation, the fixation portion 178 may be inhibited from coming off from the base plate 114.

The elastic portion 178a is arranged to be spaced upward at a predetermined distance from the fixation portion 178, and has both ends formed in a curved panel shape which is inclined downward. Therefore, when the fixation portion 178 is inserted into the groove portion 116, both ends of the elastic portion 178a are closely attached to the top surface of the base plate 114.

Accordingly, the hook forming the fixation portion 178 is closely attached to the bottom surface of the base plate 114, and both ends of the elastic portion 178a are closely attached to the top surface of the base plate 114, thereby inhibiting the coupler 170 from coming off from the base plate 114.

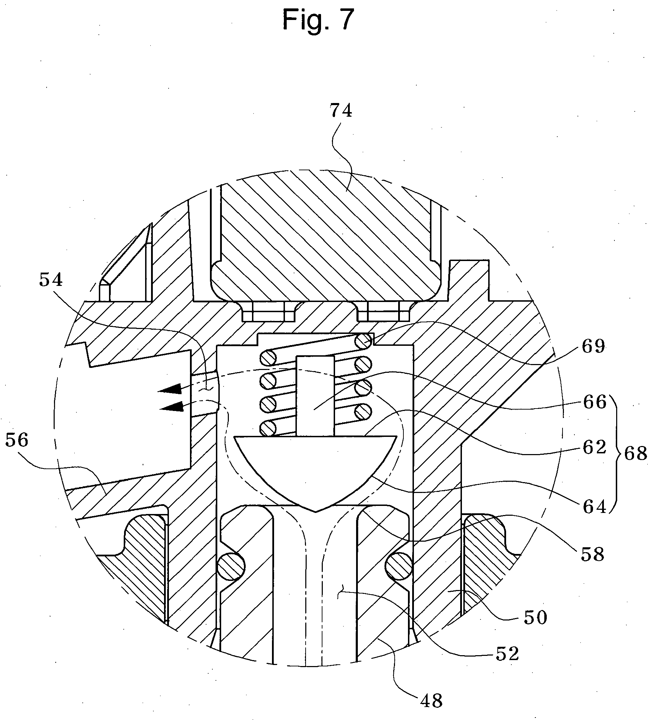

Referring to FIGS. 5 to 7, the second valve unit 60 closes the top of the inner tube 52 at a preset pressure in normal times. Then, when a force equal to or more than the preset pressure is applied to the second valve unit 60, the second valve unit 60 opens the inner tube 52. In this case, various types of valve devices may be used as the second valve unit 60, as long as they may perform the above-described operation.

The second valve unit 60 includes a second opening/closing member 68 to open and close the inner tube 52 and a second elastic member 69 to pressurize the second opening/closing member 68 toward the inner tube 52.

The second opening/closing member 68 includes a conical second stopper member 62 to close the inner tube 52 and a second body member 66 extended from the second stopper member 62 and positioned inside the second elastic member 69.

The second body member 66 is inserted into the second elastic member 69 to guide a vertical motion of the second opening/closing member 68. The second stopper member 62 is guided while contacted with a second guide portion 58 provided at the entrance of the inner tube 52.

The second guide portion 58 provided at the entrance of the inner tube 52 contacted with the second stopper member 62 is formed in an inclined shape. The second stopper member 62 contacted with the second guide portion 58 may have a straight inclined surface provided at one side thereof or a second round portion 64 formed in a convexly-curved shape.

When the second round portion 64 has a convexly-curved shape, the second guide portion 58 and the second stopper member 62 come in line contact with each other. Therefore, a flow of the liquid detergent may be cut off more reliably than when the second guide portion 58 and the second stopper member 62 come in surface contact with each other. Therefore, it is possible to improve the operation reliability.

In the second valve unit 60, the second opening/closing member 68 is elastically pressurized toward the inner tube 52. Therefore, even when only an elastic force of the second elastic member 69 is controlled, it is possible to change the pressure of the second opening/closing member 68 to close the inner tube 52. Therefore, the design and change of the pump device 1 for a liquid detergent may be easily accomplished.

The second opening/closing member 68 may be injection molded of plastic. Therefore, it is possible to reduce a production cost more than when a steel ball is used.

When the second valve unit 60 closes the inner tube 52, the second opening/closing member 68 is elastically pressurized toward the inner tube 52, thereby preventing the liquid detergent from moving through the inner tube 52. Therefore, it is possible to not only improve the operation reliability, but also prevent a siphon effect in which the liquid detergent of the detergent tank 110 is continuously supplied to the tub.

At the top of the conveying tube unit 40, a motor member 70 and the cam member 74 are installed. The motor member 70 generates a torque, and the cam member 74 pressurizes the conveying tube unit 40 toward the housing 10, while being eccentrically rotated by the motor member 70.

A rotating shaft 72 connected to the motor member 70 is inserted into the cam member 74 so as to transmit the torque of the motor member 70 to the cam member 74.

The cam member 74 includes a long shaft having a large distance from where the rotating shaft 72 is inserted to the external circumference and a short shaft having a small distance from where the rotating shaft 72 is inserted to the external circumference. The cam member 74 pressurizes the conveying tube unit 40 toward the housing 10 while being rotated.

Since the cam member 74 and the motor member 70 induce the vertical motion of the conveying tube unit 40 through a relatively simple structure, it is possible to reduce a production cost.

Hereafter, referring to the accompanying drawings, the operation of the pump device 1 for a liquid detergent in accordance with the embodiment of the present invention will be described in detail.

Referring to FIG. 5, when the short shaft of the cam member 74 is contacted with the top of the conveying tube unit 40, the bottom of the conveying tube unit 40 is supported by the spring member 42. Therefore, the conveying tube unit 40 is moved upward by an elastic force of the spring member 42.

When the inner space 12 of the housing 10 is expanded by the motion of the conveying tube unit 40, the atmospheric pressure of the inner space 12 becomes lower than that of the detergent tank 110. Therefore, the liquid detergent is introduced into the inner space 12, while the first opening/closing member 26 is lifted upward by the atmospheric pressure difference.

The elastic force of the first elastic member 28 is decided during the product design such that the inner space 12 is filled with the liquid detergent by the atmospheric pressure difference occurring while the conveying tube unit 40 is moved upward.

When the inner space 12 is filled with the liquid detergent to reduce the atmospheric pressure difference between the inner space 12 and the detergent tank 110, the elastic force of the first elastic member 28 causes the first opening/closing member 26 to close the inlet 16. Then, the flow of the liquid detergent is cut off.

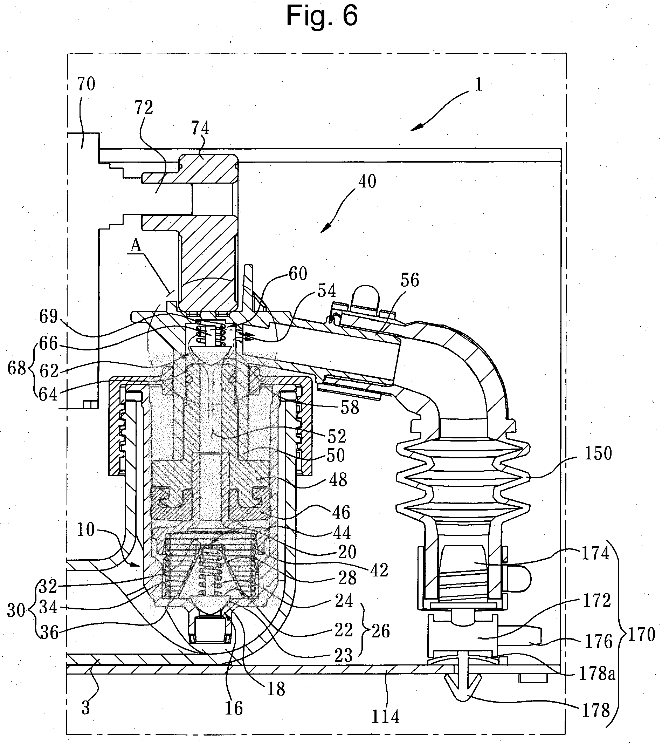

Referring to FIG. 6, when the long shaft of the cam member 74 pressurizes the conveying tube unit 40 toward the housing 10 due to the rotation of the cam member 74, the inner space 12 is reduced to increase the atmospheric pressure of the inner space 12.

Therefore, the liquid detergent in the inner space 12 is moved upward along the inner tube 52 so as to lift the second opening/closing member 68 upward, and then moved to the side tube portion 56 through the connection hole 54. The liquid detergent moved to the side tube portion 56 is supplied to the tub connected to the side tube portion 56.

When the liquid detergent in the inner space 12 is moved to the side tube portion 56 through the second valve unit 60, the atmospheric pressure of the inner space 12 decreases. Therefore, the elastic force of the second elastic member 69 causes the second opening/closing member 68 to close the inner tube 52. Then, the flow of the liquid detergent is cut off.

In accordance with the embodiment of the present invention, the first opening/closing member 26, the second opening/closing member 68, and the support member 30, which are main parts of the first valve unit 20 to control the introduction of the liquid detergent and the second valve unit 60 to control the discharge of the liquid detergent, may be injection molded, which makes it possible to reduce a production cost.

Furthermore, the first valve unit 20 is pressurized by the first elastic member 28 and closely attached to the inlet 16, and the second valve unit 60 is pressurized by the second elastic member 69 and closely attached to the entrance of the inner tube 52. Therefore, it is possible to not only improve the operation reliability, but also prevent a siphon effect in which the liquid detergent of the detergent tank 110 is continuously supplied to the tub.

Reference numeral 112 represents an outlet formed in the detergent tank 110.

The scope of the invention should be limited only by the accompanying claims.

In this specification, the pump device for a liquid detergent has been taken an example for description. However, the pump device in accordance with the embodiment of the present invention may be applied to other products.

## Claims

1. A pump device for a liquid detergent, comprising:
a corrugated tube (150) connected to a conveying tube unit (40) from which the liquid detergent is discharged;
a supply tube (180) guiding the liquid detergent supplied through the corrugated tube (150) to a tub; and
a coupler (170) connecting the corrugated tube (150) and the supply tube (180) and
coupled to a base plate (114), **characterized in that** the coupler (170) comprises:
an introduction hole portion (174) coupled to the corrugated tube (150);
a connection hole portion (176) coupled to the supply tube (180);
a main body (172) connecting the introduction hole portion (174) and the connection hole portion (176); and
a fixation portion (178) formed on the main body (172) and fixed to the base plate (114).

2. The pump device of claim 1, wherein the introduction hole portion (174) and the connection hole portion (176) are integrated with the main body (172) so as to be spaced from each other.

3. The pump device of claim 1, wherein the fixation portion (178) comprises a hook inserted into a groove portion (116) of the base plate (114).

4. The pump device of claim 3, wherein the coupler (170) further comprises an elastic portion (178a) inhibiting the fixation portion (178) from coming off from the base plate (114).

5. The pump device of claim 4, wherein the elastic portion (178a) is arranged to be spaced upward from the fixation portion (178), and has both ends formed in a curved panel shape which is inclined downward.

6. The pump device of claim 5, wherein when the fixation portion (178) is inserted into the groove portion (116) of the base plate (114) and closely attached to the bottom surface of the base plate (114), both ends of the clastic portion (178a) are closely attached to the top surface of the base plate (114).

## Patentansprüche

1. Pumpvorrichtung für ein flüssiges Reinigungsmittel, umfassend:
ein Wellrohr (150), das mit einer Förderrohreinheit (40) verbunden ist, aus der das flüssige Reinigungsmittel ausgegeben wird;
ein Zuführungsrohr (180), welches das flüssige Reinigungsmittel, das durch das Wellrohr (150) zugeführt wird, in eine Wanne führt; und
einen Koppler (170), der das Wellrohr (150) und das Zuführungsrohr (180) verbindet und mit einer Grundplatte (114) verbunden ist, **dadurch gekennzeichnet, dass** der Koppler (170) umfasst:
einen Einführlochbereich (174), der mit dem Wellrohr (150) verbunden ist;
einen Verbindungslochbereich (176), der mit dem Zuführungsrohr (180) verbunden ist;
einen Hauptkörper (172), der den Einführlochbereich (174) und den Verbindungslochbereich (176) verbindet; und
einen Befestigungsbereich (178), der am Hauptkörper (172) ausgebildet ist und an der Grundplatte (114) befestigt ist.

2. Pumpvorrichtung nach Anspruch 1, wobei der Einführlochbereich (174) und der Verbindungslochbereich (176) im Hauptkörper (172) integriert sind, um voneinander beabstandet zu sein.

3. Pumpvorrichtung nach Anspruch 1, wobei der Befestigungsbereich (178) einen Haken umfasst, der in einen Nutbereich (116) der Grundplatte (114) eingeführt wird.

4. Pumpvorrichtung nach Anspruch 3, wobei der Koppler (170) ferner einen elastischen Bereich (178a) umfasst, der verhindert, dass sich der Befestigungsbereich (178) von der Grundplatte (114) löst.

5. Pumpvorrichtung nach Anspruch 4, wobei der elastische Bereich (178a) angeordnet ist, um nach oben von dem Befestigungsbereich (178) beabstandet zu sein, wobei beide Enden davon in einer gekrümmten Plattenform ausgebildet sind, die nach unten geneigt ist.

6. Pumpvorrichtung nach Anspruch 5, wobei, wenn der Befestigungsbereich (178) in den Nutbereich (116) der Grundplatte (114) eingeführt wird und fest an der unteren Oberfläche der Grundplatte (114) befestigt wird, beide Enden des elastischen Bereichs (178a) fest an der oberen Oberfläche der Grundplatte (114) befestigt sind.

## Revendications

1. Dispositif de pompe pour un détergent liquide, comprenant :
un tube ondulé (150) raccordé à une unité de transport tubulaire (40) depuis laquelle est distribué le détergent liquide ;
un tube d'alimentation (180) guidant le détergent liquide amené par le tube ondulé (150) à une cuve ; et
un dispositif d'accouplement (170) raccordant le tube ondulé (150) et le tube d'alimentation (180) et accouplé à une plaque de base (114), **caractérisé en ce que** le dispositif d'accouplement (170) comprend :
une partie orifice d'introduction (174) accouplée au tube ondulé (150) ;
une partie orifice de raccordement (176) accouplée au tube d'alimentation (180) ;
un corps principal (172) raccordant la partie orifice d'introduction (174) et la partie orifice de raccordement (176) ; et
une partie de fixation (178) formée sur le corps principal (172) et fixée à la plaque de base (114).

2. Dispositif de pompe selon la revendication 1, dans lequel la partie orifice d'introduction (174) et la partie orifice de raccordement (176) sont intégrées au corps principal (172) de façon à être espacées l'une de l'autre.

3. Dispositif de pompe selon la revendication 1, dans lequel la partie de fixation (178) comprend un crochet inséré dans une partie rainure (116) de la plaque de base (114).

4. Dispositif de pompe selon la revendication 3, dans lequel le dispositif d'accouplement (170) comprend en outre une partie élastique (178a) empêchant la partie de fixation (178) de se dégager de la plaque de base (114).

5. Dispositif de pompe selon la revendication 4, dans lequel la partie élastique (178a) est disposée de façon à être espacée vers le haut vis-à-vis de la partie de fixation (178), et ses deux extrémités sont dotées d'une forme de patte incurvée qui est inclinée vers le bas.

6. Dispositif de pompe selon la revendication 5, dans lequel, lorsque la partie de fixation (178) est insérée dans la partie rainure (116) de la plaque de base (114) et attachée étroitement à la surface inférieure de la plaque de base (114), les deux extrémités de la partie élastique (178a) sont attachées étroitement à la surface supérieure de la plaque de base (114).
